# EUROPÄISCHE PATENTSCHRIFT

(11) **EP 3 111 526 B1**
(45) Veröffentlichungstag und Bekanntmachung des Hinweises auf die Patenterteilung: **11.04.2018**
(21) Anmeldenummer: 15709110.9
(22) Anmeldetag: 18.02.2015
(51) Int. Cl.: H02H 7/04, H02H 7/22, H02H 7/26, H02H 3/02, H02H 7/055, H02H 3/20

(54) **NETZKNOTEN FÜR EIN STROMNETZ, REGELTRANSFORMATOR FÜR EINEN NETZKNOTEN UND VERFAHREN ZUM BETREIBEN EINES NETZKNOTENS**
NETWORK NODE FOR A POWER NETWORK, VARIABLE TRANSFORMER FOR A NETWORK NODE, AND METHOD FOR OPERATING A NETWORK NODE
NOEUD DE RÉSEAU POUR RÉSEAU ÉLECTRIQUE, TRANSFORMATEUR DE RÉGLAGE POUR NOEUD DE RÉSEAU ET PROCÉDÉ POUR FAIRE FONCTIONNER UN NOEUD DE RÉSEAU

(30) Priorität: 24.02.2014 DE 102014102373
(43) Veröffentlichungstag der Anmeldung: 04.01.2017
(73) Patentinhaber: Maschinenfabrik Reinhausen GmbH, 93059 Regensburg (DE)
(72) Erfinder: SACHSENHAUSER, Andreas, 84066 Mallersdorf-Pfaffenberg (DE); KALTENBORN, Uwe, 93049 Regensburg (DE); SCHUSTER, Thomas, 93059 Regensburg (DE)
(86) Internationale Anmeldenummer: PCT/EP2015/053391
(87) Internationale Veröffentlichungsnummer: WO 2015/124611

(56) Entgegenhaltungen:
- EP-A1- 1 014 528
- WO-A1-2011/032585
- DE-C- 876 432

## Beschreibung

Die Erfindung betrifft einen Netzknoten für ein Stromnetz, insbesondere ein Umspannwerk oder ein Ortsnetzstation, einen Regeltransformator für einen Netzknoten eines Stromnetzes und ein Verfahren zum Betreiben eines Netzknotens.

Das Stromnetz kann beispielsweise ein Verbundnetz, Energieverbundnetz, Stromverbundnetz, Elektroenergienetz, Energieversorgungsnetz, Stromversorgungsnetz oder Elektrizitätsnetz sein und beispielsweise eine oder mehr als eine, insbesondere drei Phasen haben und/oder als Ringnetz oder Maschennetz oder vermaschtes Netz aufgebaut sein.

DE 10 2011 005 837 A1 beschreibt einen elektrischen Energieverteilnetzknoten für ein elektrisches Energieverteilnetz, der einen Transformator 92 sowie ein Auswertmodul aufweist und eine Ortsnetzstation mit einer Mittelspannungsschaltanlage ist, die zum Anschluss an ein Ringkabel eines Mittelspannungsnetzes geeignet ist. Dieses Dokument beschreibt außerdem ein Hochspannungsnetz, das über einen Leistungstrafo mit einem Mittelspannungsnetz in Verbindung steht. An das Mittelspannungsnetz ist ein Ringkabel angeschlossen, das Ortsnetzstationen miteinander unter Bildung eines offenen Rings verbindet. Bei dieser Anordnung ist an einen niederspannungsseitigen Anschluss der Ortsnetzstation über einen Transformator 60 eine Windkraftanlage angeschlossen. Die Windkraftanlage erzeugt elektrische Energie, die über den Niederspannungsanschluss der Ortsnetzstation in das Ringkabel und somit in das Mittelspannungsnetz eingespeist wird. Es ist vorgesehen, dass die beiden Ortsnetzstationen jeweils eine Mittelspannungsschaltanlage zum Anschluss an das Ringkabel des Mittelspannungsnetzes aufweisen. An die Mittelspannungsschaltanlage ist über einen Schalter 91 ein Transformator 92 angeschlossen, der die in einem Bereich zwischen 1 kV und 50 kV liegende Mittelspannung des Mittelspannungsnetzes in eine für Endkunden beziehungsweise Endverbraucher geeignete Niederspannung von beispielsweise 220 V pro Phase umwandelt. An den Transformator 92 ist eine Niederspannungsverteileinrichtung angeschlossen, die eine Vielzahl an Anschlüssen zur Ausgabe der Niederspannung des Transformators 92 aufweist. Es ist vorgesehen, dass die Mittelspannungsschaltanlage mit drei Schaltfeldern ausgestattet ist, nämlich einem ersten Ringkabelschaltfeld zum eingangsseitigen Anschluss des Ringkabels des Mittelspannungsnetzes, ein zweites Ringkabelschaltfeld zum ausgangsseitigen Anschluss des Ringkabels und ein Trafoschaltfeld zum Anschluss an den Schalter 91 und damit den Transformator 92. Es ist vorgesehen, dass die Mittelspannungsschaltanlage mit zwei Schalterantrieben ausgestattet ist, die auf Schalter 90d und 90e der Mittelspannungsschaltanlage einwirken. Die Schalterantriebe ermöglichen es, den jeweils zugeordneten Schalter 90d beziehungsweise 90e einzuschalten oder auszuschalten. Ein weiterer Schalterantrieb schaltet den Schalter 91 ein oder aus.

DE 10 2012 103 490 A1 beschreibt einen Verteiltransformator zur Spannungsregelung von Ortsnetzen, aufweisend eine Stammwicklung und eine Regelwicklung mit mehreren Wicklungsanzapfungen, eine Stufenregeleinrichtung zur unterbrechungslosen Umschaltung zwischen verschiedenen Wicklungsanzapfungen des Verteiltransformators, wobei mindestens eine Wählerkontakteinheit mit jeweils mehreren festen Wählerkontakten, die jeweils mit den einzelnen Wicklungsanzapfungen elektrisch in Verbindung stehen, längs einer Linie angeordnet ist, wobei die festen Wählerkontakte durch zwei längs verschiebbare bewegliche Wählerkontakte betätigbar sind, wobei zur unterbrechungslosen Umschaltung für jede Phase zwei Vakuumschaltröhren vorgesehen sind, wobei ein Motorantrieb zur Einleitung einer Antriebsbewegung in die Stufenregeleinrichtung vorgesehen ist, und wobei die mindestens eine Wählerkontakteinheit und die Schaltmittel zur unterbrechungslosen Umschaltung mittels des gemeinsamen Motorantriebes direkt betätigbar sind, derart, dass die Einleitung der Antriebbewegung des Motorantriebes auf die mindestens eine Wählerkontakteinheit und die Schaltmittel zur unterbrechungslosen Umschaltung ohne Zwischenschaltung eines Energiespeichers erfolgt.

EP 1 014 528 B1 beschreibt eine elektrische Transformatoranlage, die einen elektrischen Transformator mit Primärwicklungen und Sekundärwicklungen, einen spannungsfreien Abgriffsumschalter, ein unter Last schaltbares elektrisches Schaltgerät und Verbindungsmittel umfasst. Die Wicklungen bilden einen Primärkreis mit einer oder mehreren, über Stromversorgungsleiter gespeisten Primärphasen sowie einen Sekundärkreis mit einer oder mehreren Sekundärphasen. Der Abgriffsumschalter umfasst feststehende elektrische Kontakte, die elektrisch mit den Wicklungen verbunden sind. Der Abgriffsumschalter umfasst einen oder mehrere bewegliche Überbrückungskontakte, mit denen elektrische Anschlussverbindungen zwischen bestimmten der genannten feststehenden Kontakten hergestellt werden können. Der Abgriffsumschalter umfasst ein Umschaltorgan des beweglichen Kontakts beziehungsweise der beweglichen Kontakte, mit dem der bewegliche Kontakt beziehungsweise die beweglichen Kontakte mindestens zwischen einer ersten Stellung entsprechend einer ersten Anschlussverbindung zwischen den feststehenden Kontakten sowie einer zweiten Stellung entsprechend einer zweiten Anschlussverbindung zwischen den feststehenden Kontakten verschoben werden können. Der Abgriffsumschalter umfasst ein Betätigungsorgan, das mindestens eine erste Stellung, eine zweite Stellung sowie eine, zwischen den ersten und der zweiten Stellung angeordnete dritte Stellung einnehmen kann. Der Abgriffsumschalter umfasst eine kinematische Kette, die zwischen dem Betätigungsorgan und dem Umschaltorgan derart angeordnet ist, dass das Betätigungsorgan beim Übergang von seiner ersten Stellung in seine zweite Stellung das Umschaltorgan von dessen ersten Stellung in dessen zweite Stellung überführt. Das Schaltgerät umfasst für jeden Stromversorgungsleiter des Primärkreises einen Pol, der eine Ausschaltstellung entsprechend einer Unterbrechung des Stromflusses im Stromversorgungsleiter sowie eine Einschaltstellung entsprechend einem Stromfluss im Stromversorgungsleiter einnehmen kann. Das Schaltgerät umfasst einen Ausschaltmechanismus mit Kraftspeicherantrieb, der in der Lage ist, von einem Zustand hoher Energie in einen stabilen Zustand niedriger Energie überzugehen, und über eine kinematische Kette mit jeden Pol derart verbunden ist, dass er beim Übergang von seinem Zustand hoher Energie in den Zustand niedriger Energie den Pol beziehungsweise die Pole von deren Einschaltstellung in deren Ausschaltstellung überführt. Der Ausschaltmechanismus umfasst eine Rastsperre, die eine Verriegelungsstellung, in der sie den Ausschaltmechanismus in seinem Zustand hoher Energie verriegeln kann, sowie eine Entriegelungsstellung einnehmen kann, in der sie dem Ausschaltmechanismus erlaubt, seinen Zustand hoher Energie zu verlassen. Die Verbindungsmittel sind zwischen dem Betätigungsorgan des Abgriffsumschalters und der Rastsperre des Ausschaltmechanismus' derart angeordnet, dass beim Übergang des Betätigungsorgans von seiner ersten Stellung in seine Zwischenstellung die Rastsperre in ihre Entriegelungsstellung übergeht.

DE 876 432 B beschreibt eine Vorrichtung zur Erleichterung der Erdschlusslöschung in Höchstspannungsanlagen, bei der zwecks Beseitigung der durch Koronaverluste hervorgerufenen Störung der Löschung die Spannung beim Erdschluss abgesenkt wird, wobei die Absenkung der Spannung im Erdschluss in der bei Stufentransformatoren bekannten Weise ohne Laststromunterbrechung erfolgt.

WO 2011 032 585 A1 beschreibt eine Einrichtung zum Schutz eines Ortsnetztransformators sowie einer dreiphasige Versorgungsleitung vor einem einphasigen Fehler oder einem Phase-zu-Phase Fehler im Ortsnetztransformator. Die Einrichtung umfasst eine Schutzanordnung für den Ortsnetztransformator/die Versorgungsleitung, eine dreiphasige Stromunterbrechungseinrichtung, einen Nullstrom-Sensor und einen Auslösemechanismus für die Stromunterbrechungseinrichtung. Die Stromunterbrechungseinrichtung ist dabei zwischen die Schutzanordnung für den Ortsnetztransformator/die Versorgungsleitung und den Ortsnetztransformator geschaltet. Im Fall eines Phase-zu-Phase-Fehlers spricht die Schutzanordnung für den Ortsnetztransformator/Versorgungsleitung an, wohingegen im Fall eines einphasigen Fehlers die Stromunterbrechungseinrichtung anspricht. Der Nullstrom-Sensor ist dementsprechend dafür ausgerichtet einen Fehlerstrom (Nullstrom) im Nullsystem der dreiphasigen Mittelspannungsleitung im Fall eines einphasigen Kurzschlusses im Ortsnetztransformator zu detektieren. Für den Fall, dass der Nullstrom-Sensor einen Nullstrom detektiert, wird der Ortsnetztransformator mittels dem Auslösemechanismus und der Stromunterbrechungseinrichtung von der dreiphasigen Mittelspannungsleitung getrennt.

Eine Ortsnetzstation besteht üblicherweise aus einer Hoch- oder Oberspannungsschaltanlage - auch als RMU bezeichnet, was die Abkürzung für den englischen Begriff "Ring Main Unit" ist -, einem Transformator und einer Nieder- oder Unterspannungsschalteinrichtung. Der Transformator ist meist als Öltransformator mit einem Ölkessel ausgeführt, der mit Öl gefüllt ist und den Aktivteil des Transformators aufnimmt. Bei Integration eines Stufenschalters in einen Transformators, der dann ein Regeltransformator ist, und insbesondere Anordnung des Stufenschalters innerhalb des Ölkessels, geht der Anwender davon aus, dass eine hinreichende Zuverlässigkeit des schaltenden Elements erreicht wird, um einen wartungsfreien und sicheren Betrieb für mindestens zwölf Monate oder gar für mindestens 25 Jahre zu gewährleisten. Die ebenfalls in der Ortsnetzstation befindliche Oberspannungsschaltanlage hat eine deutlich geringere Schalthäufigkeit und weist zum Schutz des Transformators Schutzschalter auf, die häufig als Lastschalter-Sicherungs-Kombination ausgeführt sind. Da ein Zugang zu der Sicherung zum Tausch derselben gewährleistet sein muss, ist eine Separierung von Transformator und Oberspannungsschaltanlage heute üblich. Die Lastschalter der Oberspannungsschaltanlage werden insbesondere durch die sehr hohen Ströme bei Erdschluss, Kurzschluss oder Blitzschlag stark belastet.

Es ist Aufgabe der Erfindung, einen Netzknoten für ein Stromnetz, einen Regeltransformator für einen Netzknoten eines Stromnetzes und ein Verfahren zum Betreiben eines Netzknotens zu schaffen, die eine geringere Belastung und einen geringeren Verschleiß eines Schutzschalters für den Regeltransformator insbesondere beim Auslösen durch Erdschluss, Kurzschluss oder Blitzschlag ermöglichen.

Diese Aufgabe wird die Gegenstände der unabhängigen Ansprüche gelöst. Vorteilhafte Weiterbildungen und Ausführungsformen sind in den abhängigen Ansprüchen beschrieben.

Die Erfindung schlägt gemäß einem ersten Aspekt einen Netzknoten für ein Stromnetz vor, aufweisend oder umfassend
- einen Regeltransformator mit einer Primärseite und einer Sekundärseite;
- eine Primär- oder Zugangsleitung, die an die Primärseite angeschlossen ist;
- eine Sekundär- oder Abgangsleitung, die an die Sekundärseite angeschlossen ist;
- einen Schutzschalter, der in der Zugangsleitung oder der Abgangsleitung sitzt;
- einen Sensor, der eine elektrische Kenngröße in der Zugangsleitung und/oder der Abgangsleitung erfassen und wenigstens ein entsprechendes Messsignal erzeugen kann;
- ein Steuergerät, das an den Regeltransformator, den Schutzschalter und den Sensor gekoppelt und derart ausgebildet ist, dass
   - es den Regeltransformator in Abhängigkeit von dem Messsignal derart ansteuern kann, dass er ein vorbestimmtes und/oder vorbestimmbares und/oder vorgegebenes und/oder vorgebbares und/oder geeignetes Übersetzungsverhältnis hat;
   - es den Schutzschalter in Abhängigkeit von dem Messsignal derart ansteuern kann, dass er öffnet;
   wobei
- das durch das Ansteuern bewirkte Öffnen des Schutzschalters erfolgt, sobald oder nachdem der Regeltransformator das vorbestimmte Übersetzungsverhältnis hat.

Der Regeltransformator kann beispielsweise bei einem Fehlerereignis wie Erdschluss, Kurzschluss oder Blitzschlag, das von dem Steuergerät mithilfe des Sensors erkannt werden kann, durch das Einstellen eines geeigneten Übersetzungsverhältnisses beispielsweise den zu hohen Strom verringern, der durch den noch nicht ausgelösten, also geschlossenen Schutzschalter fließt. Der vorgeschlagene Regeltransformator ermöglicht somit eine geringere Belastung und einen geringeren Verschleiß der Schutzschalter insbesondere beim Auslösen beispielsweise durch Erdschluss, Kurzschluss oder Blitzschlag.

Der vorgeschlagene Netzknoten kann beispielsweise als Umspannwerk, das primärseitig an ein Höchstspannungsnetz oder Hochspannungsnetz und sekundärseitig an ein Hochspannungsnetz oder Mittelspannungsnetz gekoppelt ist, oder als Ortsnetzstation ausgebildet sein, die primärseitig an ein Mittelspannungsnetz und sekundärseitig an ein Niederspannungsnetz gekoppelt ist.

Der vorgeschlagene Netzknoten kann nach Bedarf auf beliebige Art und Weise ausgebildet sein und beispielsweise wenigstens einen zusätzlichen oder weiteren Regeltransformator und/oder wenigstens eine zusätzliche oder weitere Zugangsleitung und/oder wenigstens eine zusätzliche oder weitere Abgangsleitung und/oder wenigstens einen zusätzlichen oder weiteren Schutzschalter und/oder wenigstens einen zusätzlichen oder weiteren Sensor und/oder wenigstens ein zusätzliches oder weiteres Steuergerät umfassen oder aufweisen. Vorzugsweise ist für jede Phase eines dreiphasigen Wechselstromnetzes eine Zugangsleitung und eine Abgangsleitung vorgesehen. Falls wenigstens ein zusätzlicher oder weiterer Sensor vorhanden ist, so ist das Steuergerät vorzugsweise auch an diese gekoppelt und derart ausgebildet, dass das Ansteuern des Regeltransformators in Abhängigkeit von wenigstens einem der Messsignale, die von den angekoppelten Sensoren stammen, erfolgt und/oder das Ansteuern des Schutzschalters in Abhängigkeit von wenigstens einem der Messsignale, die von den angekoppelten Sensoren stammen, erfolgt.

Jeder Regeltransformator kann nach Bedarf auf beliebige Art und Weise ausgebildet sein und beispielsweise einphasig oder dreiphasig ausgelegt sein und/oder auf seiner Primärseite und/oder seiner Sekundärseite regelbar sein. Vorzugsweise umfasst er wenigstens eine Regeleinrichtung zum Ändern oder Regeln des Übersetzungsverhältnisses und weiter vorzugsweise auf der Primärseite und/oder der Sekundärseite jeweils wenigstens eine Regelwicklung mit wenigstens zwei Anzapfungen, die an die Regeleinrichtung angeschlossen sind. Jede Regeleinrichtung kann insbesondere wenigstens einen Laststufenschalter und/oder wenigstens einen Halbleiterschalter, insbesondere Leistungshalbleiterschalter umfassen und an das Steuergerät gekoppelt sein. Falls der Netzknoten eine Ortsnetzstation ist, so kann der Regeltransformator beispielsweise ein regelbarer Ortsnetztransformator oder RONT sein.

Jeder Regeltransformator kann beispielsweise wie einer der gemäß dem zweiten Aspekt vorgeschlagenen Regeltransformatoren ausgebildet sein.

Jeder Schutzschalter kann nach Bedarf auf beliebige Art und Weise ausgebildet sein und beispielsweise wenigstens einen Lasttrennschalter und/oder wenigstens einen Leistungsschalter umfassen. Vorzugsweise umfasst der Netzknoten wenigstens ein Schutzschaltgerät, das wenigstens einen der Schutzschalter und außerdem noch wenigstens eine Auslöse- oder Betätigungseinrichtung, die wenigstens einen der Schutzschalter betätigen kann, und/oder wenigstens einen der Sensoren umfasst, der an wenigstens eine der Betätigungseinrichtungen gekoppelt ist.

Jeder Lasttrennschalter und/oder jeder Leistungsschalter kann nach Bedarf auf beliebige Art und Weise ausgebildet sein und beispielsweise wenigstens einen Vakuumschalter und/oder wenigstens einen SF6-Gasschalter und/oder wenigstens einen Druckluftschalter und/oder wenigstens einen Ölschalter und/oder wenigstens einen ölarmen Schalter und/oder wenigstens einen Halbleiterschalter umfassen.

Jeder Sensor kann nach Bedarf auf beliebige Art und Weise ausgebildet sein und beispielsweise als elektrische Kenngröße den Strom oder die Spannung oder die Phasenverschiebung oder den Leistungsfaktor oder den Wirkfaktor oder den Verschiebungsfaktor erfassen und ein entsprechendes Messsignal erzeugen.

Jedes Steuergerät kann nach Bedarf auf beliebige Art und Weise ausgebildet sein, beispielsweise derart, dass das vorbestimmte, geeignete Übersetzungsverhältnis einem vorbestimmten oder vorgegebenen Schutzkonzept entspricht. Das Schutzkonzept kann nach Bedarf wählbar und/oder beliebig gewählt sein, beispielsweise als Überstrom-Schutzkonzept, bei dem ein zu hoher Strom in der mit dem jeweiligen Schutzschalter ausgestatteten Leitung verringert oder vermieden wird, oder Überspannung-Schutzkonzept, bei dem eine zu hohe Spannung auf der mit dem jeweiligen Schutzschalter ausgestatteten Leitung verringert oder vermieden wird, oder Unterspannung-Schutzkonzept, bei dem eine zu niedrige Spannung auf der mit dem jeweiligen Schutzschalter ausgestatteten Leitung erhöht oder vermieden wird, oder als Kombination aus wenigstens zwei dieser Schutzkonzepte.

Bei einem Überstrom-Schutzkonzept für die Primärseite oder die Zugangsleitung, wenn also ein Schutzschalter in der Zugangsleitung sitzt, kann ein geeignetes Übersetzungsverhältnis beispielsweise größer als das aktuelle Übersetzungsverhältnis und vorzugsweise das maximale Übersetzungsverhältnis sein; falls das aktuelle Übersetzungsverhältnis bereits das maximale Übersetzungsverhältnis sein sollte, so kann es das maximale Übersetzungsverhältnis sein. Ein größeres Übersetzungsverhältnis entspricht nämlich einem kleineren Strom auf der Primärseite.

Bei einem Überstrom-Schutzkonzept für die Sekundärseite oder die Abgangsleitung, wenn also ein Schutzschalter in der Abgangsleitung sitzt, kann ein geeignetes Übersetzungsverhältnis beispielsweise kleiner als das aktuelle Übersetzungsverhältnis und vorzugsweise das minimale Übersetzungsverhältnis sein; falls das aktuelle Übersetzungsverhältnis bereits das minimale Übersetzungsverhältnis sein sollte, so kann es das minimale Übersetzungsverhältnis sein. Ein kleineres Übersetzungsverhältnis entspricht nämlich einem kleineren Strom auf der Sekundärseite.

Bei einem Überspannung-Schutzkonzept für die Primärseite oder die Zugangsleitung, wenn also ein Schutzschalter in der Zugangsleitung sitzt, kann ein geeignetes Übersetzungsverhältnis beispielsweise kleiner als das aktuelle Übersetzungsverhältnis und vorzugsweise das minimale Übersetzungsverhältnis sein; falls das aktuelle Übersetzungsverhältnis bereits das minimale Übersetzungsverhältnis sein sollte, so kann es das minimale Übersetzungsverhältnis sein. Ein kleineres Übersetzungsverhältnis entspricht nämlich einer kleineren Spannung auf der Primärseite.

Bei einem Überspannung-Schutzkonzept für die Sekundärseite oder die Abgangsleitung, wenn also ein Schutzschalter in der Abgangsleitung sitzt, kann ein geeignetes Übersetzungsverhältnis beispielsweise größer als das aktuelle Übersetzungsverhältnis und vorzugsweise das maximale Übersetzungsverhältnis sein; falls das aktuelle Übersetzungsverhältnis bereits das maximale Übersetzungsverhältnis sein sollte, so kann es das maximale Übersetzungsverhältnis sein. Ein größeres Übersetzungsverhältnis entspricht nämlich einer kleineren Spannung auf der Sekundärseite.

Das geeignete Übersetzungsverhältnis hängt bevorzugt von den Eigenschaften oder charakteristischen Kenngrößen des jeweiligen Schutzschalters ab. So kann beispielsweise bei einem ersten Schutzschalter mit einer ersten Kurzschlussstromtragfähigkeit und bei einem zweiten Schutzschalter mit einer zweiten Kurzschlussstromtragfähigkeit, die größer als die erste Kurzschlussstromtragfähigkeit ist, für den ersten Schutzschalter ein erstes Übersetzungsverhältnis, für das der Regeltransformator ein erste Zeitdauer benötigt, und für den zweiten Schutzschalter ein zweites Übersetzungsverhältnis geeignet sein, für das der Regeltransformator ein zweite Zeitdauer benötigt, die größer als die erste Zeitdauer ist.

Es kann vorgesehen sein, dass
- das Steuergerät derart ausgebildet ist, dass das Ansteuern des Schutzschalters nach dem Ansteuern des Regeltransformators erfolgt.

Das Zeitintervall zwischen dem Ansteuern des Regeltransformators und dem Ansteuern des Schutzschalters wird bevorzugt mindestens so groß wie eine Schaltzeit des Regeltransformators gewählt, die beispielsweise der Regeltransformator, wenn er als Stufentransformator mit Laststufenschalter ausgebildet ist, benötigt, um von einer Anzapfung oder Stufe auf eine benachbarte Anzapfung oder Stufe zu schalten.

Es kann vorgesehen sein, dass
- das Steuergerät derart ausgebildet ist, dass das Ansteuern des Schutzschalters vor oder gleichzeitig mit dem Ansteuern des Regeltransformators erfolgt;
- der Schutzschalter an ein Verzögerungsmittel gekoppelt ist, das derart ausgebildet ist, dass es das Öffnen des Schutzschalters verzögert.

Das Verzögerungsmittel kann nach Bedarf auf beliebige Art und Weise ausgebildet sein und, wenn der Schutzschalter durch ein Relais betätigt wird, beispielsweise eine Spule, die mit der Erregerspule des Relais seriell geschaltet ist, und/oder einen Kondensator umfassen, der mit der Erregerspule des Relais parallel geschaltet ist.

Es kann vorgesehen sein, dass jeder der vorgeschlagenen Netzknoten umfasst
- eine Primär- oder Oberspannungsschaltanlage, umfassend
   - wenigstens einen der Schutzschalter, der in der Zugangsleitung sitzt;
   - zwei Primär- oder Zugangsanschlüsse;
   - zwei weitere Schutzschalter, die jeweils einen der Zugangsanschlüsse mit dem nicht an die Primärseite angeschlossen Ende der Zugangsleitung verbinden.

Über die Zugangsanschlüsse kann der Netzknoten in ein beispielsweise als Ringnetz oder Maschennetz aufgebautes Stromnetz eingebunden werden.

Jeder weitere Schutzschalter kann nach Bedarf auf beliebige Art und Weise ausgebildet sein und beispielsweise wenigstens einen Lasttrennschalter und/oder wenigstens einen Leistungsschalter und/oder wenigstens einen Trennschalter und/oder wenigstens einen Lastschalter umfassen. Jeder Lasttrennschalter kann beispielsweise ein Lasttrennschalter oder ein Vakuum-Lastschalter sein, der aufgrund der eingesetzten Vakuumröhre beispielsweise 10 Kurzschlusseinschaltungen und 10 Kurzschlussausschaltungen bei 1000 Lastschaltungen beherrscht.

Es kann vorgesehen sein, dass jeder der vorgeschlagenen Netzknoten umfasst
- wenigstens ein Filter, das an die Zugangsleitung und/oder die Abgangsleitung gekoppelt ist und insbesondere ein dynamisches Filter und/oder ein aktives Filter umfasst; und/oder
- wenigstens eine Kondensatorbank, die an die Zugangsleitung und/oder die Abgangsleitung angeschlossen ist; und/oder
- wenigstens einen Energiespeicher, der an die Zugangsleitung und/oder vorzugsweise die Abgangsleitung gekoppelt ist und insbesondere einen elektrischen Energiespeicher und/oder einen chemischen Energiespeicher und/oder einen thermischen Energiespeicher und/oder einen Druckluftspeicher umfasst.

Jeder der vorgeschlagenen Netzknoten kann beispielsweise dazu verwendet werden, eines der vorgeschlagenen Verfahren auszuführen, und/oder derart ausgebildet sein und/oder dazu dienen und/oder geeignet sein, dass er eines der vorgeschlagenen Verfahren ausführt und/oder ausführen kann.

Die Erfindung schlägt gemäß einem zweiten Aspekt einen Regeltransformator für einen Netzknoten eines Stromnetzes, wobei der Netzknoten insbesondere wie einer der gemäß dem ersten Aspekt vorgeschlagenen Netzknoten ist, umfassend
- eine Primärseite und eine Sekundärseite;
- eine Primär- oder Zugangsleitung, die an die Primärseite angeschlossen ist;
- eine Sekundär- oder Abgangsleitung, die an die Sekundärseite angeschlossen ist;
- einen Schutzschalter, der in der Zugangsleitung oder der Abgangsleitung sitzt;
- einen Sensor, der eine elektrische Kenngröße in der Zugangsleitung und/oder der Abgangsleitung erfassen und wenigstens ein entsprechendes Messsignal erzeugen kann;
- eine Regeleinrichtung zum Ändern oder Einstellen oder Regeln des Übersetzungsverhältnisses;
- ein Steuergerät, das an die Regeleinrichtung, den Schutzschalter und den Sensor gekoppelt und derart ausgebildet ist, dass
   - es die Regeleinrichtung in Abhängigkeit von dem Messsignal derart ansteuern kann, dass der Regeltransformator ein vorbestimmtes und/oder vorbestimmbares und/oder vorgegebenes und/oder vorgebbares und/oder geeignetes Übersetzungsverhältnis hat;
   - es den Schutzschalter in Abhängigkeit von dem Messsignal derart ansteuern kann, dass er öffnet;
   wobei
- das durch das Ansteuern bewirkte Öffnen des Schutzschalters erfolgt, sobald oder nachdem der Regeltransformator das vorbestimmte Übersetzungsverhältnis hat.

Die Regeleinrichtung kann beispielsweise bei einem Fehlerereignis wie Erdschluss, Kurzschluss oder Blitzschlag, das von dem Steuergerät mithilfe des Sensors erkannt werden kann, durch das Einstellen eines geeigneten Übersetzungsverhältnisses beispielsweise den zu hohen Strom verringern, der durch den noch nicht ausgelösten, also geschlossenen Schutzschalter fließt. Der vorgeschlagene Regeltransformator ermöglicht somit eine geringere Belastung und einen geringeren Verschleiß der Schutzschalter insbesondere beim Auslösen beispielsweise durch Erdschluss, Kurzschluss oder Blitzschlag.

Der vorgeschlagene Regeltransformator kann nach Bedarf auf beliebige Art und Weise ausgebildet sein und beispielsweise einphasig oder dreiphasig ausgelegt sein und/oder auf seiner Primärseite und/oder seiner Sekundärseite regelbar sein. Vorzugsweise umfasst er auf der Primärseite und/oder der Sekundärseite jeweils wenigstens eine Regelwicklung mit wenigstens zwei Anzapfungen, die an die Regeleinrichtung angeschlossen sind. Alternativ oder zusätzlich kann er beispielsweise wenigstens eine zusätzliche oder weitere Zugangsleitung und/oder wenigstens eine zusätzliche oder weitere Abgangsleitung und/oder wenigstens einen zusätzlichen oder weiteren Schutzschalter und/oder wenigstens einen zusätzlichen oder weiteren Sensor und/oder wenigstens eine zusätzliche oder weitere Regeleinrichtung und/oder wenigstens ein zusätzliches oder weiteres Steuergerät umfassen oder aufweisen. Vorzugsweise ist für jede Phase eines dreiphasigen Wechselstromnetzes eine Zugangsleitung und eine Abgangsleitung vorgesehen. Falls wenigstens ein zusätzlicher oder weiterer Sensor vorhanden ist, so ist das Steuergerät vorzugsweise auch an diese gekoppelt und derart ausgebildet, dass das Ansteuern der Regeleinrichtung in Abhängigkeit von wenigstens einem der Messsignale, die von den angekoppelten Sensoren stammen, erfolgt und/oder das Ansteuern des Schutzschalters in Abhängigkeit von wenigstens einem der Messsignale, die von den angekoppelten Sensoren stammen, erfolgt. Falls der Netzknoten eine Ortsnetzstation ist, so kann der Regeltransformator beispielsweise ein regelbarer Ortsnetztransformator oder RONT sein.

Jede Zugangsleitung kann insbesondere zumindest ein Teil einer der Zugangsleitungen des Netzknotens sein. Jede Abgangsleitung kann insbesondere zumindest ein Teil einer der Abgangsleitungen des Netzknotens sein. Jeder Schutzschalter kann insbesondere zumindest ein Teil eines der Schutzschalter des Netzknotens sein. Jeder Sensor kann insbesondere zumindest ein Teil eines der Sensoren des Netzknotens sein. Jede Regeleinrichtung kann insbesondere zumindest ein Teil einer der Regeleinrichtungen des Netzknotens sein. Jedes Steuergerät kann insbesondere zumindest ein Teil eines der Steuergeräte des Netzknotens sein.

Jede Regeleinrichtung kann nach Bedarf auf beliebige Art und Weise ausgebildet sein und beispielsweise wenigstens einen Laststufenschalter und/oder wenigstens einen Halbleiterschalter, insbesondere Leistungshalbleiterschalter umfassen.

Es kann vorgesehen sein, dass jeder vorgeschlagenen Regeltransformatoren umfasst
- eine Primär- oder Oberspannungsschaltanlage, umfassend
   - wenigstens einen der Schutzschalter, der in der Zugangsleitung sitzt;
   - zwei Primär- oder Zugangsanschlüsse;
   - zwei weitere Schutzschalter, die jeweils einen der Zugangsanschlüsse mit dem nicht an die Primärseite angeschlossen Ende der Zugangsleitung verbinden.

Jede Oberspannungsschaltanlage kann insbesondere zumindest ein Teil einer der Oberspannungsschaltanlagen des Netzknotens sein.

Es kann vorgesehen sein, dass jeder vorgeschlagenen Regeltransformatoren umfasst
- ein Gehäuse, in dem der Aktivteil des Regeltransformators und die Regeleinrichtung angeordnet sind;
wobei
- der Schutzschalter und/oder die Oberspannungsschaltanlage in dem Gehäuse angeordnet ist.

Hierdurch wird eine bessere Raumausnutzung in dem Netzknoten, in dem ein derartiger Regeltransformator angeordnet ist, ermöglicht.

Durch diese Integration in das Gehäuse ergeben sich besonders sinnvolle Ausführungen, bei denen die Schalteinheit des Laststufenschalters und die Schutzschalter räumlich nah zusammengeführt werden. In der Konsequenz kann dann der Antrieb für den Laststufenschalter und der Antrieb für die Schutzschalter in einen gemeinsamen Antrieb integriert werden. Des Weiteren kann die Steuerung aller Schalteinheiten durch den Steuerrechner des Laststufenschalters übernommen werden.

Wenn der Regeltransformator als Öltransformator mit einem Ölkessel ausgebildet ist, dann kann das Gehäuse beispielsweise der Ölkessel sein.

Es kann vorgesehen sein, dass
- der Regeltransformator in seinem Inneren wenigstens einen Temperatursensor, der ein Temperatursignal erzeugen kann, und/oder wenigstens einen Drucksensor umfasst, der ein Drucksignal erzeugen kann;
- das Steuergerät an jeden Temperatursensor und/oder jeden Drucksensor gekoppelt und derart ausgebildet ist, dass
   - es wenigstens einen der Schutzschalter in Abhängigkeit von wenigstens einem der Temperatursignale und/oder wenigstens einem der Drucksignale derart ansteuern kann, dass er öffnet.

Dieses Öffnen erfolgt bevorzugt sofort oder unmittelbar oder unverzögert.

Der Temperatursensor kann beispielsweise einen Bimetall-Schalter oder ein Thermometer mit Grenzwertauslöser umfassen.

Wenn der Regeltransformator ein Gehäuse umfasst, dann sind bevorzugt die Temperatursensoren und/oder die Drucksensoren in dem Gehäuse angeordnet.

Die Erfindung schlägt gemäß einem dritten Aspekt ein Verfahren zum Betreiben eines Netzknotens für ein Stromnetz vor, wobei der Netzknoten, der insbesondere wie einer der gemäß dem ersten Aspekt vorgeschlagenen Netzknoten ausgebildet ist, umfasst
- einen Regeltransformator mit einer Primärseite und einer Sekundärseite, der insbesondere wie einer der gemäß dem zweiten Aspekt vorgeschlagenen Regeltransformatoren ausgebildet ist;
- eine Primär- oder Zugangsleitung, die an die Primärseite angeschlossen ist;
- eine Sekundär- oder Abgangsleitung, die an die Sekundärseite angeschlossen ist;
- einen Schutzschalter, der in der Zugangsleitung oder der Abgangsleitung sitzt;
wobei
- wenigstens eine elektrische Kenngröße in der Zugangsleitung oder der Abgangsleitung überwacht und/oder gemessen und/oder erfasst wird;
- wenn wenigstens eine der Kenngrößen ein Fehlerkriterium erfüllt, dann
   - in einem Schritt a) der Regeltransformator, insbesondere in Abhängigkeit von wenigstens einer der Kenngrößen, derart angesteuert wird, dass er ein vorbestimmtes und/oder vorbestimmbares und/oder vorgegebenes und/oder vorgebbares und/oder geeignetes Übersetzungsverhältnis hat, und
   - in einem Schritt b) der Schutzschalter, insbesondere in Abhängigkeit von wenigstens einer der Kenngrößen, geöffnet wird;
- das Öffnen des Schutzschalters in Schritt b) erfolgt, sobald oder nachdem der Regeltransformator das vorbestimmte Übersetzungsverhältnis hat.

Der Regeltransformator kann beispielsweise bei einem Fehlerereignis wie Erdschluss, Kurzschluss oder Blitzschlag, das durch das Überwachen erkannt werden kann, durch das Einstellen eines geeigneten Übersetzungsverhältnisses beispielsweise den zu hohen Strom verringern, der durch den noch nicht ausgelösten, also geschlossenen Schutzschalter fließt. Das vorgeschlagene Verfahren ermöglicht somit eine geringere Belastung und einen geringeren Verschleiß der Schutzschalter insbesondere beim Auslösen beispielsweise durch Erdschluss, Kurzschluss oder Blitzschlag.

Das vorgeschlagene Verfahren kann nach Bedarf auf beliebige Art und Weise ausgebildet sein, beispielsweise derart, dass das vorbestimmte, geeignete Übersetzungsverhältnis einem vorbestimmten oder vorgegebenen Schutzkonzept entspricht. Das Schutzkonzept kann nach Bedarf wählbar und/oder beliebig gewählt sein, beispielsweise als Überstrom-Schutzkonzept oder Überspannung-Schutzkonzept oder Unterspannung-Schutzkonzept oder als Kombination aus wenigstens zwei dieser Schutzkonzepte.

Das vorgeschlagene Verfahren ermöglicht beispielsweise das Betreiben eines der vorgeschlagenen Netzknoten.

Jede elektrische Kenngröße kann nach Bedarf beliebig gewählt sein, beispielsweise als der Strom oder die Spannung oder die Phasenverschiebung oder den Leistungsfaktor oder den Wirkfaktor oder den Verschiebungsfaktor. Die überwachten Kenngrößen können nach Bedarf auf beliebige Art und Weise kombiniert und ausgewertet werden, um beispielsweise eine weitere, nicht direkt überwachte oder gemessene oder erfasste Kenngröße zu erhalten oder ermitteln oder zu errechnen. So kann beispielsweise aus den beiden Kenngrößen Strom und Phasenverschiebung als weitere Kenngröße die Spannung ermittelt werden.

Das Fehlerkriterium kann nach Bedarf beliebig gewählt sein und beispielsweise prüfen, ob die Kenngröße größer als ein erster Schwellenwert und/oder ihre Änderungsrate größer als ein zweiter Schwellenwert ist.

Es kann vorgesehen sein, dass
- zum Ansteuern des Regeltransformators in Schritt a) in einem Schritt c) ein erstes Steuersignal an den Regeltransformator gesendet wird; und/oder
- zum Öffnen des Schutzschalters in Schritt b) in einem Schritt d) ein zweites oder das erste Steuersignal an den Schutzschalter gesendet wird.

Es kann vorgesehen sein, dass
- Schritt d) nach Schritt c) ausgeführt wird.

Es kann vorgesehen sein, dass
- Schritt d) vor oder gleichzeitig mit Schritt) c ausgeführt wird;
- in Schritt b) das Öffnen des Schutzschalters verzögert wird.

Es kann vorgesehen sein, dass
- die Temperatur und/oder den Druck im Inneren des Regeltransformators überwacht wird;
- wenn die Temperatur ein Fehlerkriterium und/oder der Druck ein Fehlerkriterium erfüllt, dann der Schutzschalter geöffnet wird.

Dieses Öffnen erfolgt bevorzugt sofort oder unmittelbar oder unverzögert.

Die Ausführungen und Erläuterungen zu einem der Aspekte der Erfindung, insbesondere zu einzelnen Merkmalen dieses Aspektes, gelten entsprechend auch analog für die anderen Aspekte der Erfindung.

Im Folgenden werden Ausführungsformen der Erfindung beispielhaft anhand der beigefügten Zeichnungen näher erläutert. Die daraus hervorgehenden einzelnen Merkmale sind jedoch nicht auf die einzelnen Ausführungsformen beschränkt, sondern können mit weiter oben beschriebenen einzelnen Merkmalen und/oder mit einzelnen Merkmalen anderer Ausführungsformen verbunden und/oder kombiniert werden. Die Einzelheiten in den Zeichnungen sind nur erläuternd, nicht aber beschränkend auszulegen. Die in den Ansprüchen enthaltenen Bezugszeichen sollen den Schutzbereich der Erfindung in keiner Weise beschränken, sondern verweisen lediglich auf die in den Zeichnungen gezeigten Ausführungsformen. Die Zeichnungen zeigen in
- FIG. 1: eine erste Ausführungsform eines Netzknotens, der in ein ringförmiges Stromnetz eingebunden ist;
- FIG. 2: eine zweite Ausführungsform eines Netzknotens für ein Stromnetz, der eine bevorzugte Ausführungsform eines Regeltransformators umfasst.

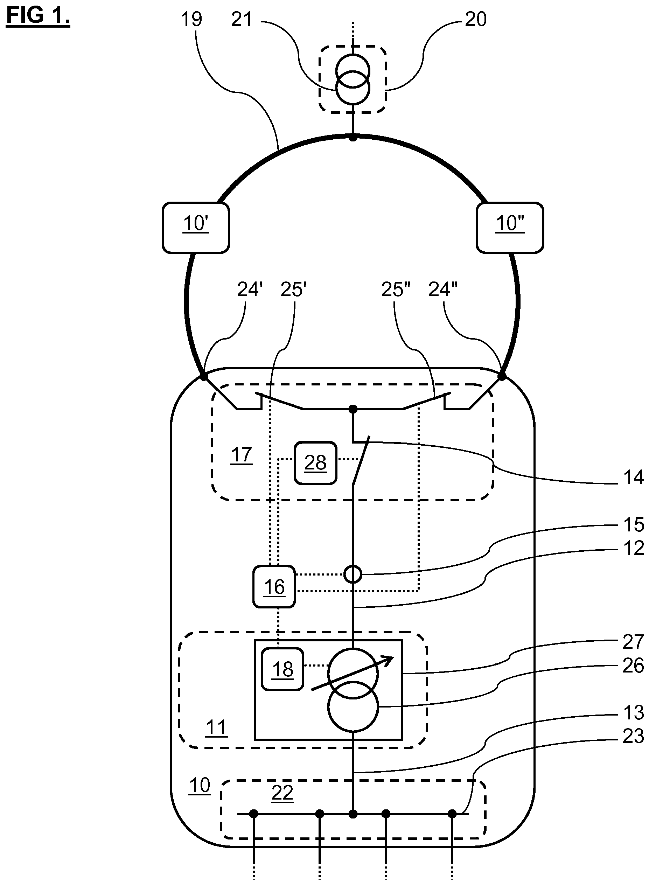

In der FIG. 1 ist eine erste Ausführungsform eines Netzknotens 10 für ein Stromnetz 19 schematisch dargestellt. Das Stromnetz 19 ist beispielhaft ein Mittelspannungsverbundnetz in Ringnetztopologie, das über ein Umspannwerk 20 mit einem Leistungstransformator 21 aus einem nicht dargestellten Hochspannungsverbundnetz gespeist wird und in das mehrere Netzknoten 10, 10', 10" eingebunden sind, von denen nur der Netzknoten 10 detaillierter dargestellt ist.

Bei dieser Ausführungsform umfasst der Netzknoten 10 einen Regeltransformator 11 mit einer Primärseite und einer Sekundärseite, eine Zugangsleitung 12, die an die Primärseite angeschlossen ist, eine Abgangsleitung 13, die an die Sekundärseite angeschlossen ist, einen Schutzschalter 14, der in der Zugangsleitung 12 sitzt, einen Sensor 15, der eine elektrische Kenngröße in der Zugangsleitung 12 erfassen und ein Messsignal erzeugen kann, ein Steuergerät 16, das an den Regeltransformator 11 , den Schutzschalter 14 und den Sensor 15 gekoppelt ist, und eine Unterspannungsverteileinrichtung 22, die beispielhaft eine Niederspannungsverteileinrichtung ist.

Bei dieser Ausführungsform umfasst der Netzknoten 10 außerdem eine Oberspannungsschaltanlage 17, die beispielhaft eine Mittelspannungsschaltanlage ist und den Schutzschalter 14, zwei Zugangsanschlüsse 24', 24" und zwei weitere Schutzschalter 25', 25" umfasst, die an das Steuergerät 16 gekoppelt ist. Über die Zugangsanschlüsse 24', 24" ist der Netzknoten 10 in das ringförmige Stromnetz 19 eingebunden, indem jeder über einen der Schutzschalter 25', 25" mit dem von dem Regeltransformator 11 fernen Ende des Schutzschalters 14 und somit mit dem nicht an die Primärseite angeschlossen Ende der Zugangsleitung 12 verbunden ist.

Der Regeltransformator 11 ist beispielhaft ein regelbarer Ortsnetztransformator, der auch als RONT bezeichnet wird und ein Aktivteil 26, eine Regeleinrichtung 18 zum Ändern des Übersetzungsverhältnisses des Regeltransformators 11 und ein Gehäuse 27 umfasst, in dem der Aktivteil 26 und die Regeleinrichtung 18 sitzen. Die Regeleinrichtung 18 ist an die Primärseite des Aktivteils 26 angeschlossen, die für jede Phase des Stromnetzes 19 eine nicht dargestellte Regelwicklung mit mehreren Anzapfungen umfasst, zwecks Steuerung an das Steuergerät 16 gekoppelt und beispielhaft ein Laststufenschalter.

Die Unterspannungsverteileinrichtung 22 umfasst eine Sammelschiene 23 mit mehreren Anschlüssen, über die beispielsweise Energieverbraucher, wie etwa Haushalte, die von dem Netzknoten 10 erzeugte Niederspannung beziehen und/oder Energieerzeuger, wie etwa Photovoltaikanlagen und Windkrafträder, ihre erzeugte elektrische Energie in das Stromnetz 19 einspeisen können.

Der Sensor 15 ist beispielhaft ein Stromsensor und als Stromwandler ausgebildet, sodass er als Kenngröße den Strom in der Zugangsleitung 12 erfasst und als Messsignal ein Stromsignal erzeugen kann.

Das Steuergerät 16 ist derart ausgebildet, dass es die Regeleinrichtung 18 und somit den Regeltransformator 11 in Abhängigkeit von dem Stromsignal derart ansteuern kann, dass der Regeltransformator 11 ein einem vorgegebenen Schutzkonzept entsprechendes und somit ein vorbestimmtes geeignetes Übersetzungsverhältnis hat, und dass es den Schutzschalter 14 in Abhängigkeit von dem Messsignal derart ansteuern kann, dass er öffnet, wobei das durch das Ansteuern bewirkte Öffnen des Schutzschalters 14 erfolgt, sobald oder nachdem der Regeltransformator 11 das geeignete Übersetzungsverhältnis hat. Das durch das Ansteuern bewirkte Öffnen des Schutzschalters 14 erfolgt also um ein Zeitintervall verzögert zu dem Ansteuern des Regeltransformators 11.

Als Schutzkonzept ist beispielhaft ein Überstrom-Schutzkonzept in dem Steuergerät 16 hinterlegt. Gemäß diesem Überstrom-Schutzkonzept bestimmt das Steuergerät 16 das maximale Übersetzungsverhältnis als das geeignete Übersetzungsverhältnis, falls das aktuelle Übersetzungsverhältnis das maximale Übersetzungsverhältnis ist, und andernfalls dasjenige Übersetzungsverhältnis als das geeignete Übersetzungsverhältnis, das zu dem aktuellen Übersetzungsverhältnis das nächstgrößere Übersetzungsverhältnis ist.

Bei dieser Ausführungsform ist das Steuergerät 16 derart ausgebildet, dass das Ansteuern des Schutzschalters 14 gleichzeitig mit dem Ansteuern des Regeltransformators 11 erfolgt, und ist der Schutzschalter 14 an ein Verzögerungsmittel 28 gekoppelt, das derart ausgebildet ist, dass es das Öffnen des Schutzschalters 14 um ein vorbestimmtes Zeitintervall verzögert. Der Schutzschalter 14 wird beispielhaft durch ein nicht dargestelltes Relais betätigt, und das Verzögerungsmittel 28 umfasst beispielhaft eine nicht dargestellte Spule, die mit der Erregerspule des Relais seriell geschaltet ist. Das vorbestimmte Zeitintervall ist so gewählt, dass der Regeltransformator 11 auf das geeignete Übersetzungsverhältnis umschalten kann.

Im Folgenden wird eine erste Ausführungsform eines Verfahrens zum Betreiben eines Netzknotens 10 für ein Stromnetz 19 näher erläutert werden, wobei der Netzknoten 10 beispielhaft der in der FIG. 1 gezeigte Netzknoten 10 ist.

Bei dieser Ausführungsform wird der Strom in der Zugangsleitung 12 überwacht. Dies erfolgt beispielhaft mithilfe des Sensors 15 und des Steuergeräts 16. Das Überwachen erfolgt beispielsweise derart, dass geprüft wird, ob der Strom größer als ein dem vorgegebenen Überstrom-Schutzkonzept entsprechender und somit ein vorbestimmter Schwellenwert ist und ob er somit ein Fehlerkriterium erfüllt.

Wenn diese Prüfung ergibt, dass dieser Fall zutrifft, wenn also der Strom das Fehlerkriterium erfüllt, dann wird in einem Schritt a) der Regeltransformator 11 derart angesteuert, dass er das vorbestimmte geeignete Übersetzungsverhältnis hat, und in einem Schritt b) der Schutzschalter 14 geöffnet. Dies erfolgt beispielhaft mithilfe des Steuergeräts 16.

Zum Ansteuern des Regeltransformators 11 in Schritt a) wird in einem Schritt c) ein erstes Steuersignal an die Regeleinrichtung 18 und somit an den Regeltransformator 11 gesendet. Dies erfolgt beispielhaft mithilfe des Steuergeräts 16.

Zum Öffnen des Schutzschalters 14 in Schritt b) wird in einem Schritt d) das erste Steuersignal an den Schutzschalter 14 gesendet und Schritt d) gleichzeitig mit Schritt) c ausgeführt. Dies erfolgt beispielhaft mithilfe des Steuergeräts 16.

In Schritt b) wird das Öffnen des Schutzschalters 14 verzögert. Dies erfolgt beispielhaft mithilfe des Verzögerungsmittels 28. Folglich erfolgt das Öffnen des Schutzschalters 14 in Schritt b), sobald oder nachdem der Regeltransformator 11 das vorbestimmte Übersetzungsverhältnis hat.

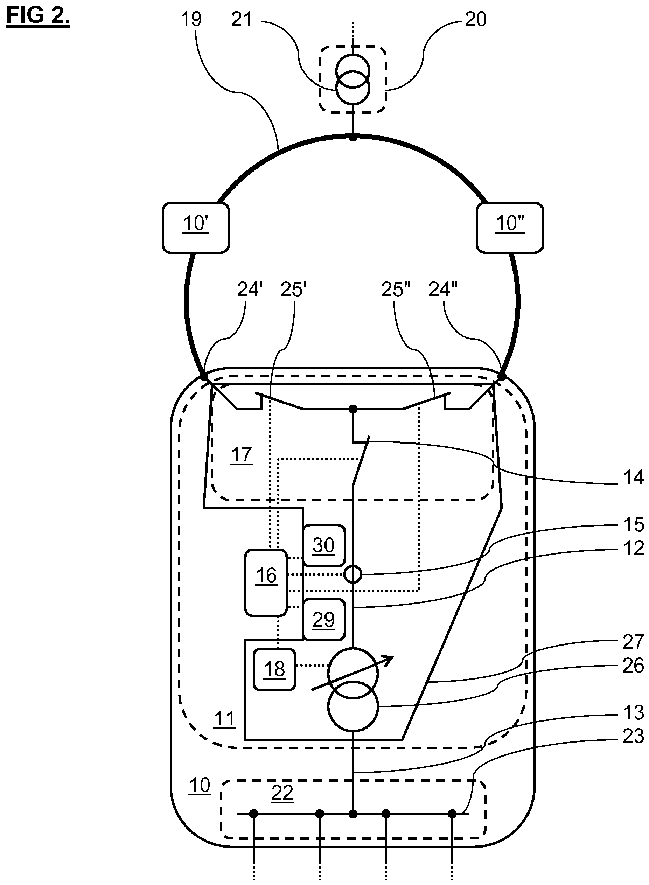

In der FIG. 2 ist eine zweite Ausführungsform eines Netzknotens 10 für ein Stromnetz 19 schematisch dargestellt. Diese zweite Ausführungsform ähnelt der ersten Ausführungsform, sodass im Folgenden vor Allem die Unterschiede näher erläutert werden.

Bei dieser Ausführungsform ist der Regeltransformator 11 gemäß einer bevorzugt Ausführungsform ausgebildet und entfällt das Verzögerungsmittel 28.

Der Regeltransformator 11 umfasst beispielhaft die Zugangsleitung 12, die Abgangsleitung 13, den Schutzschalter 14, den Sensor 15, das Steuergerät 16, die Oberspannungsschaltanlage 17, einen Temperatursensor 29, der ein Temperatursignal erzeugen kann, und einen Drucksensor 30, der ein Drucksignal erzeugen kann. Er ist als Öltransformator ausgeführt, und sein Gehäuse 27 ist ein hermetisch abgeschlossener Ölkessel, der mit Öl gefüllt ist und die Zugangsleitung 12, den Sensor 15, die Oberspannungsschaltanlage 17, den Temperatursensor 29 und den Drucksensor 30 aufnimmt.

Das Steuergerät 16 ist an den Temperatursensor 29 und den Drucksensor 30 gekoppelt und derart ausgebildet ist, dass es in Abhängigkeit von dem Temperatursignal, falls beispielsweise die Temperatur im Inneren des Gehäuses 27 einen vorbestimmten Schwellenwert übersteigt, und dem Drucksignal, falls beispielsweise der Druck Temperatur im Inneren des Gehäuses 27 einen vorbestimmten Schwellenwert übersteigt, den Schutzschalter 14 derart ansteuern kann, dass er sofort öffnet.

Bei dieser Ausführungsform des Netzknotens 10 ist das Steuergerät 16 derart ausgebildet, dass das Ansteuern des Schutzschalters 14 um das vorbestimmte Zeitintervall nach dem Ansteuern des Regeltransformators 11 erfolgt. Ein Verzögerungsmittel 28 wie bei der ersten Ausführungsform des Netzknotens 10 ist daher nicht erforderlich.

Im Folgenden wird eine zweite Ausführungsform eines Verfahrens zum Betreiben eines Netzknotens 10 für ein Stromnetz 19 näher erläutert werden, wobei der Netzknoten 10 beispielhaft der in der FIG. 2 gezeigte Netzknoten 10 ist. Diese zweite Ausführungsform ähnelt der ersten Ausführungsform, sodass im Folgenden vor Allem die Unterschiede näher erläutert werden.

Bei dieser Ausführungsform wird in Schritt d) ein zweites Steuersignal an den Schutzschalter 14 gesendet und Schritt d) nach Schritt) c ausgeführt. Dies erfolgt beispielhaft mithilfe des Steuergeräts 16.

In Schritt b) öffnet der Schutzschalter 14 sofort oder unmittelbar oder unverzögert nach Erhalt des zweiten Steuersignals. Da Schritt d) nach Schritt) c ausgeführt wird, erfolgt das Öffnen des Schutzschalters 14 in Schritt b), sobald oder nachdem der Regeltransformator 11 das vorbestimmte Übersetzungsverhältnis hat.

### BEZUGSZEICHEN

- 10: Netzknoten, Ortsnetztransformator
- 11: Regeltransformator
- 12: Zugangsleitung
- 13: Abgangsleitung
- 14: Schutzschalter
- 15: Sensor
- 16: Steuergerät
- 17: Oberspannungsschaltanlage.
- 18: Regeleinrichtung
- 19: Stromnetz
- 20: Umspannwerk
- 21: Leistungstransformator
- 22: Unterspannungsverteileinrichtung
- 23: Sammelschiene
- 24: Zugangsanschluss
- 25: weitere Schutzschalter
- 26: Aktivteil von 11
- 27: Gehäuse von 11
- 28: Verzögerungsmittel
- 29: Temperatursensor
- 30: Drucksensor

## Patentansprüche

1. Netzknoten (10) für ein Stromnetz (19), insbesondere Umspannwerk oder Ortsnetzstation, umfassend
- einen Regeltransformator (11) mit einer Primärseite und einer Sekundärseite;
- eine Zugangsleitung (12), die an die Primärseite angeschlossen ist;
- eine Abgangsleitung (13), die an die Sekundärseite angeschlossen ist;
- einen Schutzschalter (14), der in der Zugangsleitung (12) oder der Abgangsleitung (13) sitzt;
- einen Sensor (15), der eine elektrische Kenngröße in der Zugangsleitung (12) und/oder der Abgangsleitung (13) erfassen und ein Messsignal erzeugen kann;
- ein Steuergerät (16), das an den Regeltransformator (11), den Schutzschalter (14) und den Sensor (15) gekoppelt und derart ausgebildet ist, dass
• es den Regeltransformator (11) in Abhängigkeit von dem Messsignal derart ansteuern kann, dass er ein vorbestimmtes Übersetzungsverhältnis hat;
• es den Schutzschalter (14) in Abhängigkeit von dem Messsignal derart ansteuern kann, dass er öffnet;
wobei
- das durch das Ansteuern bewirkte Öffnen des Schutzschalters (14) erfolgt, sobald der Regeltransformator (11) das vorbestimmte Übersetzungsverhältnis hat.

2. Netzknoten (10) nach dem vorigen Anspruch, wobei
- das Steuergerät (16) derart ausgebildet ist, dass das Ansteuern des Schutzschalters (14) nach dem Ansteuern des Regeltransformators (11) erfolgt.

3. Netzknoten (10) nach dem vorvorigen Anspruch, wobei
- das Steuergerät (16) derart ausgebildet ist, dass das Ansteuern des Schutzschalters (14) vor oder gleichzeitig mit dem Ansteuern des Regeltransformators (11) erfolgt;
- der Schutzschalter (14) an ein Verzögerungsmittel (28) gekoppelt ist, das derart ausgebildet ist, dass es das Öffnen des Schutzschalters (14) verzögert.

4. Netzknoten (10) nach einem der vorigen Ansprüche, umfassend
- eine Oberspannungsschaltanlage (17), umfassend
• den Schutzschalter (14), der in der Zugangsleitung (12) sitzt;
• zwei Zugangsanschlüsse (24', 24");
• zwei weitere Schutzschalter (25', 25"), die jeweils einen der Zugangsanschlüsse (24', 24") mit dem nicht an die Primärseite angeschlossen Ende der Zugangsleitung (12) verbinden.

5. Netzknoten (10) nach einem der vorigen Ansprüche, umfassend
- ein Filter, das an die Zugangsleitung (12) und/oder die Abgangsleitung (13) gekoppelt ist und insbesondere ein dynamisches Filter und/oder ein aktives Filter umfasst; und/oder
- eine Kondensatorbank, die an die Zugangsleitung (12) und/oder die Abgangsleitung (13) angeschlossen ist; und/oder
- einen Energiespeicher, der an die Zugangsleitung (12) und/oder die Abgangsleitung (13) gekoppelt ist und insbesondere einen elektrischen Energiespeicher und/oder einen chemischen Energiespeicher und/oder einen thermischen Energiespeicher und/oder einen Druckluftspeicher umfasst.

6. Regeltransformator (11) für einen Netzknoten (10) eines Stromnetzes (19), wobei der Netzknoten (10) gemäß einem der vorigen Ansprüche ausgebildet ist, umfassend
- eine Primärseite und eine Sekundärseite;
- eine Zugangsleitung (12), die an die Primärseite angeschlossen ist;
- eine Abgangsleitung (13), die an die Sekundärseite angeschlossen ist;
- einen Schutzschalter (14), der in der Zugangsleitung (12) oder der Abgangsleitung (13) sitzt;
- einen Sensor (15), der eine elektrische Kenngröße in der Zugangsleitung (12) und/oder der Abgangsleitung (13) erfassen und ein Messsignal erzeugen kann;
- eine Regeleinrichtung (18) zum Ändern des Übersetzungsverhältnisses;
- ein Steuergerät (16), das an die Regeleinrichtung (18), den Schutzschalter (14) und den Sensor (15) gekoppelt und derart ausgebildet ist, dass
• es die Regeleinrichtung (18) in Abhängigkeit von dem Messsignal derart ansteuern kann, dass der Regeltransformator (11) ein vorbestimmtes Übersetzungsverhältnis hat;
• es den Schutzschalter (14) in Abhängigkeit von dem Messsignal derart ansteuern kann, dass er öffnet;
wobei
- das durch das Ansteuern bewirkte Öffnen des Schutzschalters (14) erfolgt, sobald der Regeltransformator (11) das vorbestimmte Übersetzungsverhältnis hat.

7. Regeltransformator (11) nach dem vorigen Anspruch, umfassend
- eine Oberspannungsschaltanlage (1.7), umfassend
• den Schutzschalter (14), der in der Zugangsleitung (12) sitzt;
• zwei Zugangsanschlüsse;
• zwei weitere Schutzschalter, die jeweils einen der Zugangsanschlüsse mit dem nicht an die Primärseite angeschlossen Ende der Zugangsleitung (12) verbinden.

8. Regeltransformator (11) nach einem der Ansprüche 6 bis 7, umfassend
- ein Gehäuse (27), in dem der Aktivteil (26) des Regeltransformators (11) und die Regeleinrichtung (18) angeordnet sind;
wobei
- der Schutzschalter (14) und/oder die Oberspannungsschaltanlage (17) in dem Gehäuse (27) angeordnet ist.

9. Regeltransformator (10) nach einem der Ansprüche 6 bis 8, wobei
- der Regeltransformator (11) in seinem Inneren einen Temperatursensor (29), der ein Temperatursignal erzeugen kann, und/oder einen Drucksensor (30) umfasst, der ein Drucksignal erzeugen kann;
- das Steuergerät (16) an den Temperatursensor(29) und/oder den Drucksensor (30) gekoppelt und derart ausgebildet ist, dass
• es den Schutzschalter (14) in Abhängigkeit von dem Temperatursignal und/oder dem Drucksignal derart ansteuern kann, dass er öffnet.

10. Verfahren zum Betreiben eines Netzknotens (10) für ein Stromnetz (19), wobei der Netzknoten (10) gemäß einem der Ansprüche 1 bis 5 ausgebildet ist, umfasst
- einen Regeltransformator (11) mit einer Primärseite und einer Sekundärseite;
- eine Zugangsleitung (12), die an die Primärseite angeschlossen ist;
- eine Abgangsleitung (13), die an die Sekundärseite angeschlossen ist;
- einen Schutzschalter (14), der in der Zugangsleitung (12) oder der Abgangsleitung (13) sitzt;
wobei
- eine elektrische Kenngröße in der Zugangsleitung (12) oder der Abgangsleitung (13) überwacht wird;
- wenn die Kenngröße ein Fehlerkriterium erfüllt, dann
• in einem Schritt a) der Regeltransformator (11), in Abhängigkeit von der Kenngröße, derart angesteuert wird, dass er ein vorbestimmtes Übersetzungsverhältnis hat, und
• in einem Schritt b) der Schutzschalter (14), in Abhängigkeit von der Kenngröße, geöffnet wird;
- das Öffnen des Schutzschalters (14) in Schritt b) erfolgt, sobald der Regeltransformator (11) das vorbestimmte Übersetzungsverhältnis hat.

11. Verfahren nach dem vorigen Anspruch, wobei
- zum Ansteuern des Regeltransformators (11) in Schritt a) in einem Schritt c) ein erstes Steuersignal an den Regeltransformator (11) gesendet wird; und/oder
- zum Öffnen des Schutzschalters (14) in Schritt b) in einem Schritt d) ein zweites oder das erste Steuersignal an den Schutzschalter (14) gesendet wird.

12. Verfahren nach dem vorigen Anspruch, wobei
- Schritt d) nach Schritt c) ausgeführt wird.

13. Verfahren nach dem vorvorigen Anspruch, wobei
- Schritt d) vor oder gleichzeitig mit Schritt) c ausgeführt wird;
- in Schritt b) das Öffnen des Schutzschalters (14) verzögert wird.

14. Verfahren nach einem der Ansprüche 10 bis 13, wobei
- die Temperatur und/oder den Druck im Inneren des Regeltransformators (11) überwacht wird;
- wenn die Temperatur ein Fehlerkriterium und/oder der Druck ein Fehlerkriterium erfüllt, dann der Schutzschalter (14) geöffnet wird.

## Claims

1. A network node (10) for a power grid (19), in particular, for a substation or a local network station, comprising
- a regulating transformer (11) with a primary side and a secondary side;
- an input line (12), which is connected to the primary side;
- an output line (13), which is connected to the secondary side;
- a protective switch (14), which is positioned in the input line (12) or in the output line (13);
- a sensor (15), which can detect an electrical parameter in the input line (12) and/or in the output line (13) and generate a measurement signal;
- a control device (16), which is coupled to the regulating transformer (11), to the protective switch (14), and to the sensor (15), and which is formed such that
• it can control the regulating transformer (11) in dependence on the measurement signal in such a manner that the regulating transformer (11) has a predetermined transmission ratio;
• it can control the protective switch (14) in dependence on the measurement signal in such a manner that the protective switch (14) opens;
wherein
- the opening of the protective switch (14), which is effected by the control, is carried out as soon as the regulating transformer (11) has the predetermined transmission ratio.

2. The network node (10) according to the previous claim wherein
- the control device (16) is formed such that the control of the protective switch (14) is carried out after the control of the regulating transformer (11).

3. The network node (10) according to the claim preceding the previous claim wherein
- the control device (16) is formed such that the control of the protective switch (14) is carried out prior to or simultaneously with the control of the regulating transformer (11);
- the protective switch (14) is coupled to a delay means, which is formed such that it delays the opening of the protective switch (14).

4. The network node (10) according to one of the previous claims, comprising
- a primary side switchgear (17), comprising
• the protective switch (14), which is positioned in the input line (12);
• two input connections;
• two further protective switches, which each connect one of the input connections to that end of the input line (12) that is not connected to the primary side.

5. The network node (10) according to one of the previous claims, comprising
- a filter, which is coupled to the input line and/or to the output line and comprises, in particular, a dynamic filter and/or an active filter; and/or
- a capacitor bank, which is connected to the input line and/or to the output line; and/or
- an energy storage, which is coupled to the input line and/or preferably to the output line and comprises, in particular, an electrical energy storage and/or a chemical energy storage and/or a thermal energy storage and/or a compressed air reservoir.

6. A regulating transformer (11) for a network node (10) of a power grid (19) wherein the network node (10) is formed, according to one of the previous claims, comprising
- a primary side and a secondary side;
- an input line (12), which is connected to the primary side;
- an output line (13), which is connected to the secondary side;
- a protective switch (14), which is positioned in the input line (12) or in the output line (13);
- a sensor (15), which can detect an electrical parameter in the input line (12) and/or in the output line (13) and generate a measurement signal;
- a regulating device (18) for changing the transmission ratio;
- a control device (16), which is coupled to the regulating device (18), to the protective switch (14), and to the sensor (15), and which is formed such that
• it can control the regulating device (18) in dependence on the measurement signal in such a manner that the regulating transformer (11) has a predetermined transmission ratio;
• it can control the protective switch (14) in dependence on the measurement signal in such a manner that the protective switch (14) opens;
wherein
- the protective switch (14) opening, which is effected by the control, is carried out as soon as the regulating transformer (11) has the predetermined transmission ratio.

7. The regulating transformer (11) according to the previous claim, comprising
- a primary side switchgear (17), comprising
• the protective switch (14), which is positioned in the input line (12);
• two input connections;
• two further protective switches, which each connect one of the input connections to that end of the input line (12) that is not connected to the primary side.

8. The regulating transformer (11) according to one of the previous claims, comprising
- a housing, in which the active part of the regulating transformer (11) and the regulating device (18) are arranged;
wherein
- the protective switch (14) and/or the primary side switchgear (17) are arranged in the housing.

9. The regulating transformer (10) according to one of the previous claims wherein
- the regulating transformer (11) comprises, on its inside, a temperature sensor, which can generate a temperature signal, and/or a pressure sensor, which can generate a pressure signal;
- the control device (16) is coupled to the temperature sensor and/or to the pressure sensor and which is formed such that
• it can control the protective switch (14) in dependence on the temperature signal and/or in dependence on the pressure signal in such a manner that the protective switch (14) opens.

10. A method for operating a network node (10) for a power grid (19) wherein the network node (10), which is formed according to one of the previous claims, comprises
- a regulating transformer (11) with a primary side and a secondary side;
- an input line (12), which is connected to the primary side;
- an output line (13), which is connected to the secondary side;
- a protective switch (14), which is positioned in the input line (12) or in the output line (13);
wherein
- an electrical parameter in the input line (12) or in the output line (13) is monitored;
- if the parameter meets an error criterion, then
• the regulating transformer (11) is controlled in a step a)in dependence on the parameter, in such a manner that the regulating transformer (11) has a predetermined transmission ratio, and
• the protective switch (14) is opened in a step b) in dependence on the parameter;
- the opening of the protective switch (14) is carried out in step b) as soon as the regulating transformer (11) has the predetermined transmission ratio.

11. The method according to one of the previous claims wherein
- a first control signal is sent to the regulating transformer (11) in a step c) for the purpose of controlling the regulating transformer (11) in step a); and/or
- a second or the first control signal is sent to the protective switch (14) in a step d) for the purpose of opening the protective switch (14) in step b).

12. The method according to the previous claim wherein
- step d) is carried out after step c).

13. The method according to to the claim preceding the previous claim wherein
- step d) is carried out prior to or simultaneously with step c);
- the opening of the protective switch (14) is delayed in step b).

14. The method according to one of the previous claims wherein
- the temperature and/or the pressure is monitored on the inside of the regulating transformer (11);
- if the temperature meets an error criterion and/or if the pressure meets an error criterion, then the protective switch (14) is opened.

## Revendications

1. Noeud de réseau (10) pour un réseau électrique (19), en particulier sous-station ou poste de réseau local comprenant :
- un transformateur de réglage (11) ayant un côté primaire et un coté secondaire,
- une conduite d'entrée (12) qui est connectée au côté primaire,
- une conduite de sortie (13) qui est connectée au côté secondaire,
- un disjoncteur de protection (14) qui est monté dans la conduite d'entrée (12) ou dans la conduite de sortie (13),
- un capteur (15) pouvant détecter une grandeur électrique caractéristique dans la conduite d'entrée (12) et/ou dans la conduite de sortie (13) et produire un signal de mesure,
- un appareil de commande (16) qui est couplé au transformateur de réglage (11), au disjoncteur de protection (14) et au capteur (15) et est réalisé de façon à pouvoir :
• commander le transformateur de réglage (11) en fonction du signal de mesure de façon à obtenir un rapport de transmission prédéfini,
• commander le disjoncteur de protection (14) en fonction du signal de mesure de sorte qu'il s'ouvre,
- l'ouverture du disjoncteur de protection (14) provoquée par la commande s'effectuant dès que le transformateur de réglage (11) a le rapport de transmission prédéfini.

2. Noeud de réseau (10) conforme à la revendication précédente dans lequel l'appareil de commande (16) est réalisé de sorte que la commande du disjoncteur de protection (14) s'effectue après la commande du transformateur de réglage (11).

3. Noeud de réseau (10) conforme à la revendication précédente dans lequel :
- l'appareil de commande (16) est réalisé de sorte que la commande du disjoncteur de protection (14) s'effectue avant ou simultanément à la commande du transformateur de réglage (11),
- le disjoncteur de protection (14) est couplé à un moyen de temporisation (28) qui est réalisé pour retarder l'ouverture du disjoncteur de protection (14).

4. Noeud de réseau (10) conforme à l'une des revendications précédentes comprenant :
- un poste à haute tension (17) comprenant :
• le disjoncteur de protection (14) qui est monté dans la conduite d'entrée (12),
• deux bornes d'entrée (24', 24"),
• deux autres disjoncteurs de protection (25', 25") qui relient chacun l'une des bornes d'entrée (24', 24") avec l'extrémité de la conduite d'entrée (12) qui n'est pas connectée au côté primaire.

5. Noeud de réseau (10) conforme à l'une des revendications précédentes comprenant :
- un filtre qui est couplé à la conduite d'entrée (12) et/ou à la conduite de sortie (13), et renferme en particulier un filtre dynamique et/ou un filtre actif, et/ou
- un banc de condensateurs qui est connecté à la conduite d'entrée (12) et/ou à la conduite de sortie (13), et/ou
- un accumulateur d'énergie qui est couplé à la conduite d'entrée (12) et/ou à la conduite de sortie (13) et renferme en particulier un accumulateur d'énergie électrique et/ou un accumulateur d'énergie chimique et/ou un accumulateur d'énergie thermique et/ou un accumulateur d'air comprimé.

6. Transformateur de réglage (11) destiné à un noeud de réseau (10) d'un réseau électrique (19), le noeud de réseau (10) étant réalisé conformément à l'une des revendications précédentes, comprenant :
- un côté primaire et un côté secondaire,
- une conduite d'entrée (12) qui est connectée au côté primaire,
- une conduite de sortie (13) qui est connectée au côté secondaire,
- un disjoncteur de protection (14) qui est monté dans la conduite d'entrée (12) ou dans la conduite de sortie (13),
- un capteur (15) qui est susceptible de détecter une grandeur électrique caractéristique dans la conduite d'entrée (12) et/ou dans la conduite de sortie (13) et de produire un signal de mesure,
- un dispositif de réglage (18) permettant de modifier le rapport de transmission,
- un appareil de commande (16) qui est couplé au dispositif de réglage (18), au disjoncteur de protection (14) et au capteur (15) et est réalisé de façon à permettre :
• de régler le dispositif de réglage (18) en fonction du signal de mesure de sorte que le transformateur de réglage (11) ait un rapport de transmission prédéfini,
• de commander le disjoncteur de protection (14) en fonction du signal de mesure de sorte qu'il s'ouvre,
- l'ouverture du disjoncteur de protection (14) provoquée par la commande se produisant dès que le transformateur de réglage (11) a atteint le rapport de transmission prédéfini.

7. Transformateur de réglage (11) conforme à la revendication précédente comprenant :
- un poste à haute tension (17) comprenant :
• le disjoncteur de protection (14) qui est monté dans la conduite d'entrée (12),
• deux bornes d'entrée,
• deux autres disjoncteurs de protection qui relient chacun l'une des bornes d'entrée avec l'extrémité de la conduite d'entrée (12) non connectée au côté primaire.

8. Transformateur de réglage (11) conforme à l'une des revendications 6 et 7, comprenant :
- un boîtier (27) dans lequel sont montés la partie active (26) du transformateur de réglage (11) et le dispositif de réglage (18),
- le disjoncteur de protection (14) et/ou le poste à haute tension (17) étant monté(s) dans le boîtier (27).

9. Transformateur de réglage (10) conforme à l'une des revendications 6 à 8 dans lequel :
- le transformateur de réglage (11) comporte, à sa partie interne, un capteur de température (29) qui peut produire un signal de température et/ou un capteur de pression (30) qui peut produire un signal de pression,
- l'appareil de commande (16) est couplé au capteur de température (29) et/ou au capteur de pression (30) et est réalisé de façon à permettre de commander le disjoncteur de protection (14) en fonction du signal de température et/ou du signal de pression de sorte qu'il s'ouvre.

10. Procédé de gestion d'un noeud de réseau (10) destiné à un réseau électrique (19), le noeud de réseau (10) étant réalisé conformément à l'une des revendications précédentes, comprenant :
- un transformateur de réglage (11) ayant un côté primaire et un coté secondaire,
- une conduite d'entrée (12) qui est connectée au côté primaire,
- une conduite de sortie (13) qui est connectée au côté secondaire,
- un disjoncteur de protection (14) qui est monté dans la conduite d'entrée (12) ou dans la conduite de sortie (13),
selon lequel
- une grandeur électrique caractéristique est surveillée dans la conduite d'entrée (12) et/ou dans la conduite de sortie (13),
- lorsque la grandeur caractéristique satisfait à un critère de défaut,
• dans une étape a), le transformateur de réglage (11) est commandé en fonction de la grandeur caractéristique de sorte qu'il ait un rapport de transmission prédéfini, et
• dans une étape b), le disjoncteur de protection (14) est ouvert en fonction de la grandeur caractéristique,
- l'ouverture du disjoncteur de protection (14) lors de l'étape b) se produisant dès que le transformateur de réglage (11) a atteint le rapport de transmission prédéfini.

11. Procédé conforme à la revendication précédente selon lequel :
- pour commander le transformateur de réglage (11) lors de l'étape a), dans une étape c), un premier signal de commande est transmis au transformateur de réglage (11), et/ou
- pour ouvrir le disjoncteur de protection (14) lors de l'étape b), dans une étape d), un second signal de commande ou le premier signal de commande est transmis au disjoncteur de protection (14).

12. Procédé conforme à la revendication précédente selon lequel :
- l'étape d) est mise en oeuvre après l'étape c).

13. Procédé conforme à la revendication 11 selon lequel :
- l'étape d) est mise en oeuvre avant ou simultanément à l'étape c), et
- lors de l'étape b), l'ouverture du disjoncteur de protection (14) est retardée.

14. Procédé conforme à l'une des revendications 10 à 13 selon lequel :
- la température et/ou la pression à la partie interne du transformateur de réglage (11) est(sont) surveillées,
- lorsque la température et/ou la pression satisfait a(ont) un critère de défaut, le disjoncteur de protection (14) est ouvert.
